# EUROPEAN PATENT APPLICATION

(11) **EP 4 231 746 A1**
(43) Date of publication of application: **23.08.2023**
(21) Application number: 20957697.4
(22) Date of filing: 15.10.2020
(51) Int. Cl.: H04W 72/04

(54) **TERMINAL AND BASE STATION**

(71) Applicant: NTT DOCOMO, INC., Tokyo 100-6150 (JP)
(72) Inventor: SHIBAIKE, Naoya, Tokyo 100-6150 (JP); MATSUMURA, Yuki, Tokyo 100-6150 (JP); HARADA, Hiroki, Tokyo 100-6150 (JP)
(74) Representative: Hoffmann Eitle
(86) International application number: PCT/JP2020/038981
(87) International publication number: WO 2022/079868

(57) **Abstract**

Provided is a terminal comprising a receiving unit for receiving, from a base station, resource configuration information of an SRS (sounding reference signal) for antenna switching and a transmitting unit for transmitting a plurality of SRS with a guard period of a number of symbols greater than a specific number of symbols based on the resource configuration information.

## Description

### [TECHNICAL FIELD]

The present invention relates to a terminal and a base station in a wireless communication system.

### [BACKGROUND]

In NR (New Radio) (also referred to as "5G"), which is a successor system to LTE (Long Term Evolution), technologies are being considered to satisfy requirements such as high-capacity systems, fast data transmission rates, low latency, simultaneous connection of a plurality of terminals, low cost, and lower power saving. In addition, in NR, the use of high frequency bands such as 52.6-114.25 GH is considered.

In addition, NR stipulates an SRS (Sounding Reference Signal) usage in which a base station acquires CSI (Channel State Information) of a downlink using channel reciprocity through SRS transmitted from a terminal (Non-Patent Reference 1). This SRS usage is called antenna switching.

### [Related Art]

### [Non-patent Reference]

[Non-Patent Reference 1] 3GPP TS 38.214 V16.3.0 (2020-09)
[Non-Patent Reference 2] 3GPP TS 38.331 V16.2.0 (2020-09)

### [SUMMARY]

### [Technical Problem]

However, a terminal that complies with the existing NR stipulations with assumed frequency bands up to 52.6 GHz may not be able to properly execute antenna switching in high frequency bands between 52.6 and 114.25 GH.

The present invention takes the above points into consideration and aims to provide a technology that enables an SRS for acquiring channel state information of a downlink to be appropriately transmitted in a terminal.

### [Solution to Problem]

According to the disclosed technology, provided is a terminal comprising a receiving unit configured to receive, from a base station, resource configuration information of an SRS (sounding reference signal) for antenna switching, and
a transmitting unit configured to transmit a plurality of SRS with a guard period of a number of symbols greater than a specific number of symbols based on the resource configuration information.

### [Beneficial Effect of the Invention]

According to the disclosed technology, provided is a technology that enables an SRS for acquiring channel state information of a downlink to be appropriately transmitted in a terminal.

### [BRIEF DESCRIPTION OF THE DRAWINGS]

[FIG. 1] is a diagram illustrating a wireless communication system according to an embodiment of the present invention.
[FIG. 2] is a diagram illustrating a wireless communication system according to an embodiment of the present invention.
[FIG. 3] is a diagram showing an example of a band.
[FIG. 4] is a diagram showing the relationship between SCS and symbol length.
[FIG. 5] is a diagram illustrating an example of SRS-assisted DL CSI acquisition.
[FIG. 6] is a drawing illustrating an example of SRS-assisted DL CSI acquisition.
[FIG. 7] is a drawing showing a minimal guard period between SRS resources.
[FIG. 8] is a drawing showing examples of Y values.
[FIG. 9] is a drawing showing examples of Y values.
[FIG. 10] is a drawing illustrating example operations of a base station 10 and a terminal 20.
[FIG. 11] is a drawing showing examples of Y values.
[FIG. 12] is a drawing illustrating example operations of a base station 10 and a terminal 20.
[FIG. 13] is a drawing showing an example of SRS resource settings.
[FIG. 14] is a drawing showing an example of SRS resource settings.
[FIG. 15] is a diagram showing an example of a functional configuration of a base station 10 according to an embodiment of the present invention.
[FIG. 16] is a diagram showing an example of a functional configuration of a terminal 20 according to an embodiment of the present invention.
[FIG. 17] is a diagram showing an example of a hardware configuration of a base station 10 or of a terminal 20 according to an embodiment of the present invention.

### [DETAILED DESCRIPTION]

Embodiments of the present invention are described below with reference to the drawings. It should be noted that the embodiments described below are examples and the embodiments to which the present invention is applied are not limited to the following embodiments.

Prior arts are appropriately used in the operation of the wireless communication system according to an embodiment of the present invention. The existing technology is, for example, the existing NR. A wireless communication system (base station 10 and terminal 20) of an embodiment of the present invention basically operates in compliance with the existing stipulations (e.g., Non-Patent References 1 and 2, and other R-16 specifications). However, in order to solve issues when use of a high frequency band is assumed, a base station 10 and a terminal 20 execute operations that are not in the existing stipulations. The operations not in the existing stipulations are mainly described in the description of the examples below. Note that all of the following numerical values are examples.

In addition, in the embodiments of the present invention, a duplex system may be a TDD (Time Division Duplex) system, an FDD (Frequency Division Duplex) system, or any other system (for example, Flexible Duplex system).

In addition, in the embodiments of the present invention, "configuring" a wireless parameter and the like may mean "pre-configuring" a predetermined value or configuring a wireless parameter notified from a base station 10 or a terminal 20.

### (System Configuration)

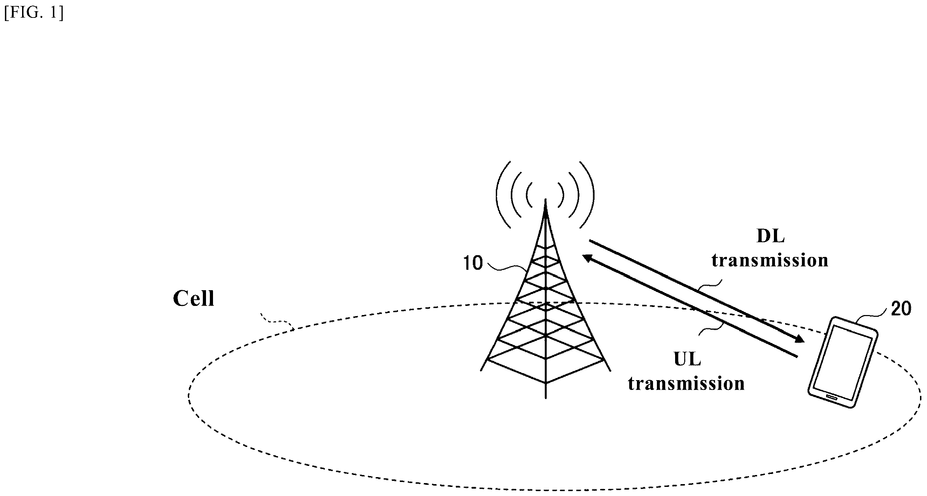

FIG. 1 is a diagram illustrating a wireless communication system according to an embodiment of the present invention. The wireless communication system according to an embodiment of the present invention comprises a base station 10 and a terminal 20 as shown in FIG. 1. FIG. 1 shows one base station 10 and one terminal 20, but this is just an example and there can be a plurality of each.

The base station 10 is a communication device that provides one or more cells and performs wireless communication with the terminal 20. A physical resource for a wireless signal is defined by a time domain and a frequency domain.

OFDM is used as a wireless access method. In the frequency domain, subcarrier spacings (SCS) of at least 15 kHz, 30 kHz, 120 kHz and 240 kHz are supported. SCS wider than 240 kHz may be supported. In addition, regardless of SCS, a resource block consists of a certain number (e.g., 12) of consecutive subcarriers.

When performing initial access, the terminal 20 detects an SSB (SS/PBCH block), and identifies an SCS in a PDCCH and PDSCH based on a PBCH included in the SSB.

In addition, in the time domain, a slot consists of a plurality of OFDM symbols (e.g., 14 OFDM symbols, regardless of the subcarrier spacing). Hereafter, an OFDM symbol will be called a "symbol". A slot is a scheduling unit. In addition, a subframe having a 1 ms interval is defined, and a subframe comprising 10 subframes is defined. Note that the number of symbols per slot is not limited to 14.

As shown in FIG. 1, a base station 10 transmits control information or data to a terminal 20 via a DL (Downlink), and receives control information or data from the terminal 20 via an UL (Uplink). Both the base station 10 and the terminal 20 can transmit and receive signals by beam forming. In addition, both the base station 10 and the terminal 20 can apply MIMO (Multiple Input Multiple Output) communication to DL or UL. It is also acceptable for both the base station 10 and the terminal 20 to communicate via a SCell (Secondary Cell) and a PCell (Primary Cell) by means of Carrier Aggregation (CA).

The terminal 20 is a communication device having a wireless communication function, suchas a smart phone, a mobile phone, a tablet, a wearable terminal, and a communication module for M2M (Machine-to-Machine). As shown in FIG. 1, the terminal 20 receives control information or data from the base station 10 via a DL and transmits control information or data to the base station 10 via a UL, thereby using various types of communication services provided by the wireless communication system.

The terminal 20 is capable of performing carrier aggregation by bundling multiple cells (multiple CCs (component carriers)) together and communicating with the base station 10. In carrier aggregation, one PCell (Primary Cell) and one or more SCells (Secondary Cell) are used. In addition, a PUCCH-SCell having PUCCH can be used.

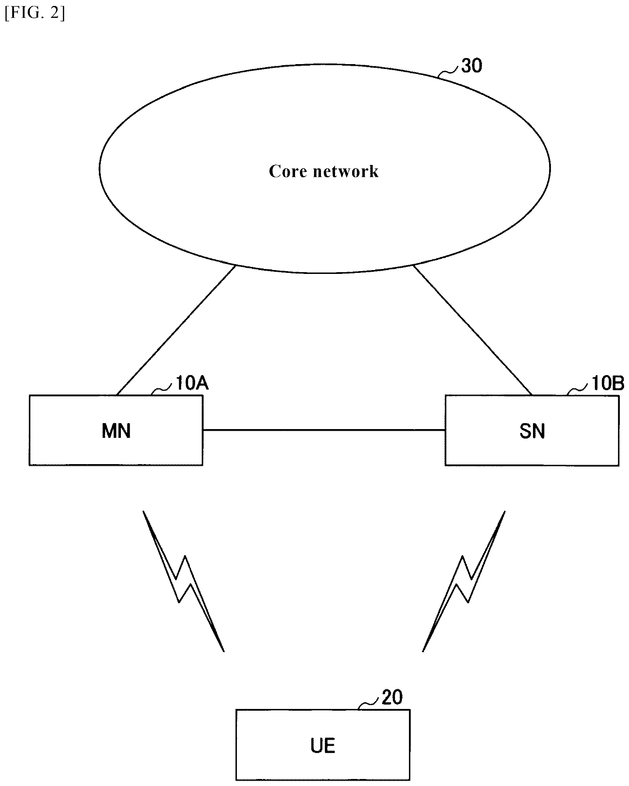

FIG. 2 shows an example of a configuration of a wireless communication system when NR-DC (NR-Dual Connectivity) is implemented. As shown in FIG. 2, a base station 10A forming an MN (Master Node) and a base station 10B forming an SN (Secondary Node) are provided. The base station 10A and the base station 10B are each connected to a core network. The terminal 20 communicates with both the base station 10A and the base station 10B.

The cell group provided by the base station 10A that is the MN is called an MCG (Master Cell Group), and the cell group provided by the base station 10B that is the SN is called an SCG (Secondary Cell Group) . In addition, in the DC, the MCG consists of one PCell and one or more SCells, and the SCG consists of one Primary SCell (PSCell) and one or more SCells. Note that in the present specification, a CC (Component Carrier) and a cell can be used in the same manner. A PCell or PSCell can also be called an SPCell.

The wireless communication system in the present embodiment executes LBT (Listen-Before-Talk) when an unlicensed band is used. The base station 10 or terminal 20 transmits when the LBT result indicates idle and does not transmit when the LBT result indicates busy.

### (Frequency Bands)

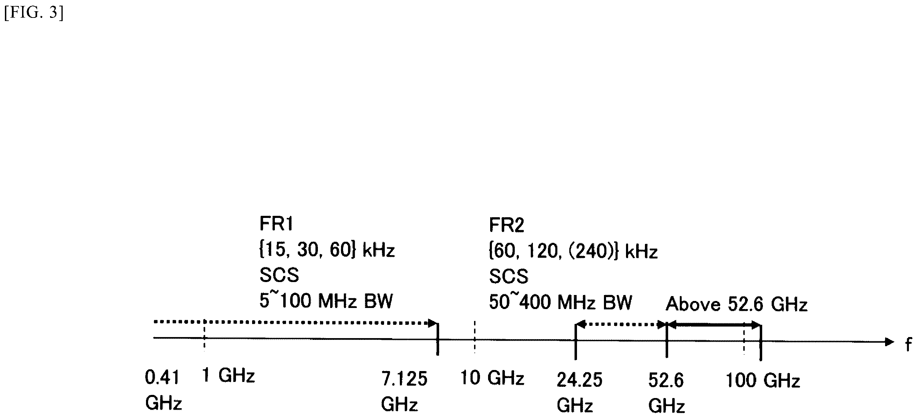

FIG. 3 shows a frequency band used in the existing NR and a frequency band used in a wireless communication system of the present embodiment. Two frequency bands (or frequency band ranges) in the existing NR are FR1 (0.41 GHz to 7.125) and FR2 (24.25 GHz to 52.6 GHz). As shown in FIG. 3, in FR1, 15 kHz, 30 kHz and 60 kHz are supported as SCS, and 5-100 MHz is supported as a bandwidth (BW). In FR2, 60 kHz, 120 kHz and 240 kHz (SSB only) are supported as SCS, and 50-400 MHz is supported as a bandwidth (BW).

The wireless communication system of the present embodiment assumes use of frequency bands higher than 52.6 GHz (e.g., 52.6 GHz to 114.25 GHz), which is not supported by the existing NR. This frequency band can also be referred to as FR4.

In addition, it is assumed in the present embodiment that as the bandwidth is expanded as described above, an SCS wider than the existing SCS will be used. For example, an SCS of 480 kHz or wider will be used for the SCS of SSB and PDCCH/PDSCH.

### (Problems)

It is assumed that in a high frequency band, many narrow beams are used in order to compensate for propagation loss. In addition, an SCS wider than the existing FR2 SCS (e.g., 480 kHz, or 960 kHz) will be used.

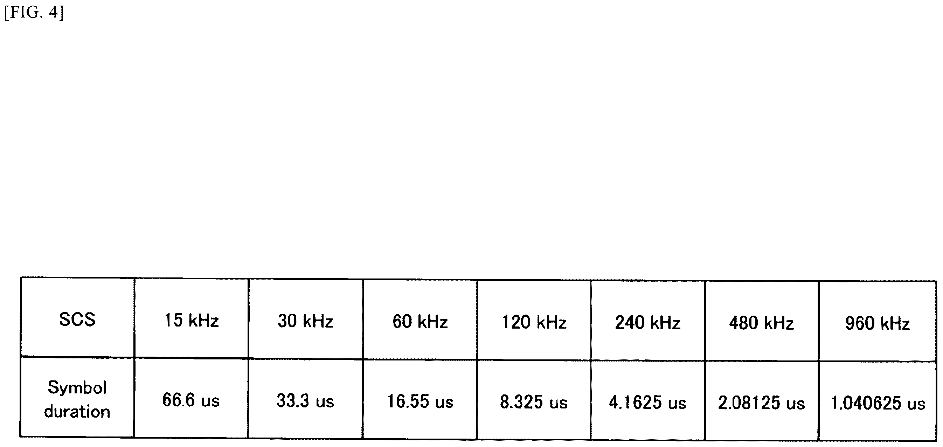

FIG. 4 is a drawing showing the relationship between SCS and symbol length (time length of a symbol) . As shown in FIG. 4, the symbol length (time length of a symbol) shortens as the SCS widens. In addition, if the number of symbols per single slot is fixed (i.e., at 14 symbols), the slot length shortens as the SCS widens.

As described above, in the NR system assumed in the present embodiment, there is an SRS usage in which a base station 10 acquires CSI (Channel State Information) of a downlink using channel reciprocity through SRS (Sounding Reference Signal) transmitted from a terminal 20. This SRS usage is called antenna switching. This operation is also called DL CSI acquisition (downlink channel state information acquisition).

However, beams narrow and increase, and as SCS widens, if the terminal 20 and the base station 10 operate according to conventional stipulations, the terminal 20 may not be able to appropriately execute SRS transmission operation for antenna switching.

A technology for solving this problem and allowing a terminal 20 to appropriately executing SRS transmission operation for antenna switching is described below.

### (Basic Operations, Problem Details)

First, basic operations involved in SRS antenna switching of a wireless communication system of the present embodiment is described.

In a wireless communication system of the present embodiment, a terminal 20 configures one or more SRS resource sets according to an upper layer parameter SRS-ResourceSet from a base station 10. One or more SRS resources (upper layer parameter SRS-Resource) are configured by each SRS resource set (Non-Patent References 1 and 2).

In addition to the one or more SRS resources above, the SRS-ResourceSet configures resourceType (periodic, aperiodic, semi-persistent) and usage (beam management, codebook-based, non-codebook-based transmission, antenna switching).

In addition, SRS-Resource configures period, resource mapping (symbol position in a slot, OFDM symbol length, etc.), SRS port number, repetitionFactor, transmissionComb, etc.

Note that when a plurality of SRS ports are configured in one SRS resource, each SRS of the plurality of SRS ports is alternately mapped (interleaved) in the frequency domain in the same OFDM symbol.

When an SRS is used in DL CSI acquisition, antenna switching is configured to the SRS-ResourceSet usage. In antenna switching, configuration of an SRS resource set and SRS resource is established according to the transmission/reception capability of a terminal 20 (supportedSRS-TxPortSwitch). The transmission/reception capability, such as 1T2R, 2T4R and 1T4R, is a parameter transmitted to a base station 10 from a terminal 20.

1T2R means that a terminal 20 can perform SRS transmission once (the same symbol) at one SRS port, and can receive a signal once (the same symbol) at two UE antenna ports. Alternatively, 1T2R can be described as a configuration with one transmitting antenna and two receiving antennas. Here, "transmitting antenna" and "receiving antenna" do not each necessarily correspond to a single physical antenna. Configurations with one transmitting antenna and two receiving antennas include, for example, a terminal 10 provided with two physical antennas, wherein the two physical antennas are able to receive two signals at a time and to transmit only one signal at a time. 1T2R can also be described as a configuration with one transmitting port and two receiving ports or as a configuration with one transmission and two receptions.

2T4R means that a terminal 10 can perform SRS transmission once (in the same symbol) at two SRS ports, and can receive a signal once (in the same symbol) at four UE antenna ports. Alternatively, 2T4R can be described as a configuration with two transmitting antenna and four receiving antennas. Here, "transmitting antenna" and "receiving antenna" do not each necessarily correspond to a single physical antenna. Configurations with two transmitting antenna and four receiving antennas include, for example, a terminal 10 provided with four physical antennas, wherein the four physical antennas are able to receive four signals at a time, two of the four physical antennas are able to transmit one signal and the remaining two physical antennas are able to transmit one signal. 2T4R can also be described as a configuration with two transmitting ports and four receiving ports or as a configuration with two transmissions and four receptions. The description above also applies to other configurations such as 1T4R.

As described in Non-Patent Reference 1, when the capability of a terminal 20 is 1T2R, the SRS configuration in the prior art is as follows.

"For 1T2R, up to two SRS resource sets configured with a different value for the higher layer parameter resourceType in SRS-ResourceSet set, where each set has two SRS resources transmitted in different symbols, each SRS resource in a given set consisting of a single SRS port, and the SRS port of the second resource in the set is associated with a different UE antenna port than the SRS port of the first resource in the same set".

In addition, when the capability of terminal 20 is 2T4R, the SRS configuration in the prior art is as follows.

"For 2T4R, up to two SRS resource sets configured with a different value for the higher layer parameter resourceType in SRS-ResourceSet set, where each SRS resource set has two SRS resources transmitted in different symbols, each SRS resource in a given set consisting of two SRS ports, and the SRS port pair of the second resource is associated with a different UE antenna port pair than the SRS port pair of the first resource".

In addition, as stated in "For 1T2R, 1T4R or 2T4R, the UE shall not expect to be configured or triggered with more than one SRS resource set with higher layer parameter usage set as 'antennaSwitching' in the same slot. For 1T=1R, 2T=2R or 4T=4R, the UE shall not expect to be configured or triggered with more than one SRS resource set with higher layer parameter usage set as 'antennaSwitching' in the same symbol", a plurality of SRS resource sets are not configured in the same slot.

Although the present embodiment operates basically in the same manner as stipulated above, some different operations performed are described later.

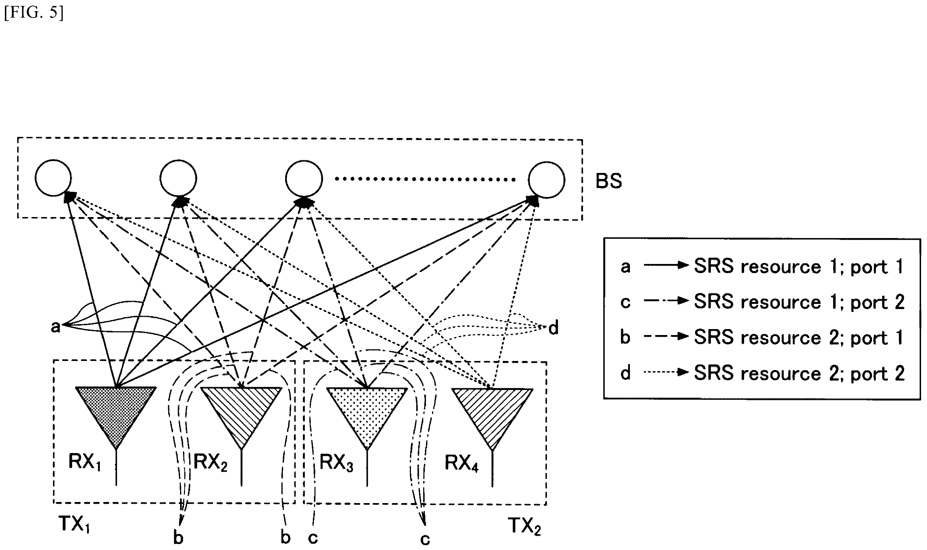

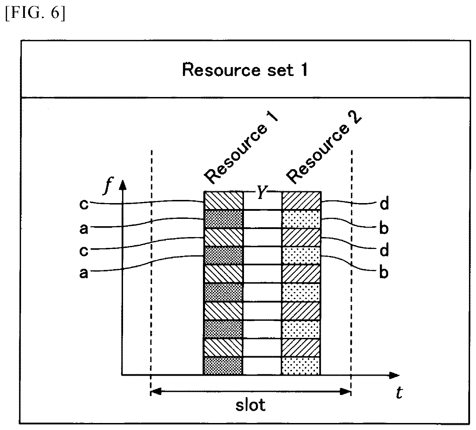

An operation example of antenna switching in which the capability of a terminal 20 is 2T4R is described below with reference to FIG. 5 and FIG. 6.

In the example shown in FIG. 5, a terminal 20 is provided with four antennas, two of which are used to transmit two SRS (signals indicated by "a" and "c") of SRS port 1 and SRS port 2 in an SRS resource 1, and the remaining two of which are used to transmit two SRS (signals indicated by "b" and "d") of SRS port 1 and SRS port 2 in an SRS resource 2.

FIG. 6 is a resource diagram of the above case. As shown in FIG. 6, the two SRS (signals indicated by "a" and "c") of SRS port 1 and SRS port 2 are transmitted in the same symbol of SRS resource 1, and the two SRS (signals indicated by "b" and "d") of SRS port 1 and SRS port 2 are transmitted in the same symbol of SRS resource 2.

Here, for example, a pair of SRS resource 1 and SRS port 1 may correspond to UE antenna port 0, a pair of SRS resource 1 and SRS port 2 may correspond to UE antenna port 1, a pair of SRS resource 2 and SRS port 1 may correspond to UE antenna port 3, and a pair of SRS resource 2 and SRS port 2 may correspond to UE antenna port 4. By receiving the SRS shown in FIGs. 5 and 6, a base station 10 can obtain four-signal (channel) DL CSI by means of channel symmetry (reciprocity).

As shown in FIG. 6, when SRS is transmitted by a plurality of SRS resources (SRS-mapped time resources) in one slot, a guard period of Y symbols, which is a minimal guard period, is set between SRS resources. A terminal 20 cannot transmit any signal in this guard period.

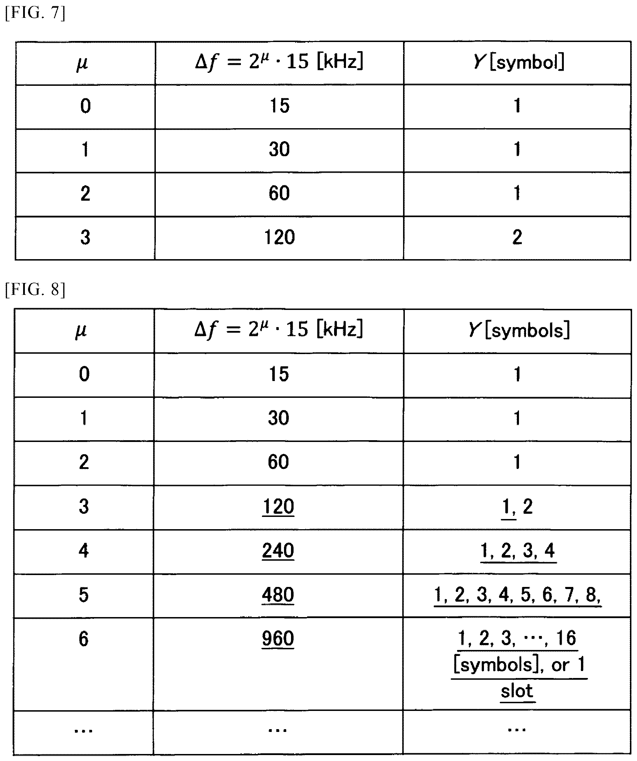

FIG. 7 shows the value of Y stipulated in Non-Patent Reference 1. As shown in FIG. 7, when SCS is 120 kHz, it is stipulated that Y is two symbols.

This guard period is set by a terminal 20 and the terminal 20 can decide not to transmit a signal in this guard period. In addition, it is assumed that this guard period is configured in a base station 10, and the base station 10 configures a plurality of SRS resources for the terminal 20 so that the stipulated guard period is assured.

However, as described above, in the high frequency band assumed in the present embodiment, the SCS is wider than 120 kHz, and the symbol length accordingly shortens, so in the existing stipulation shown in FIG. 7, it is unclear what kind of guard period should be assured for the terminal 20 and the base station 10 during antenna switching, and there is a possibility that an appropriate operation cannot be performed.

Examples 1-3 are described below as operation examples for solving this problem. Note that in Examples 1-3, antenna switching operations are assumed and the basic operations of the terminal 20 and the base station 10 are the same as described above, but the guard period, the number of SRS resource sets configured, the number of SRS resources configured per SRS resource set, etc., can have values not available in the conventional art.

### (Example 1)

In Example 1, when a base station 20 configures a plurality of SRS resources in a single SRS resource set, a value shown in FIG. 8 is defined as a minimal guard period (the value of Y) between SRS resources. FIG. 8 shows candidate values for Y actually used in a terminal 20 and a base station 20.

In the example in FIG. 8, when SCS is 120 kHz, 1 or 2 is used for Y; when SCS is 240 kHz, 1, 2, 3 or 4 is used for Y. In addition, when SCS is 480 kHz, 1, 2, 3, 4, 5, 6, 7 or 8 is used for Y; when SCS is 960 kHz, 1, 2, or 3, ... or 16 symbols, or one slot, is used for Y.

For example, when the terminal 20 and the base station 10 are configured so that Y=4 when SCS=480 kHz, the base station 10, when SCS=480 kHz is used, configures a plurality of SRS resources such that the guard period between a plurality of SRS resources in an SRS resource set for use in antenna switching becomes at least four symbols. In addition, when performing SRS transmission using a plurality of SRS resources in an SRS resource set for use in antenna switching, the terminal 10 transmits SRS such that the SRS transmission interval (guard period) becomes a minimum of four symbols. Note that "transmitting SRS" may also be expressed as "transmitting an SRS resource".

According to Example 1, allocation of inappropriate (e.g., the guard interval is too short) SRS resources may be avoided.

More specific examples of Example 1 are described below as Examples 1-1 to 1-3.

### <Example 1-1>

In Example 1-1, table information comprising any of the candidate values shown in FIG. 8 is stipulated in the specification and the like. The table information is configured in each of the terminal 20 and the base station 10. That is to say, the base station 20 and the terminal 10 each hold the table information in advance.

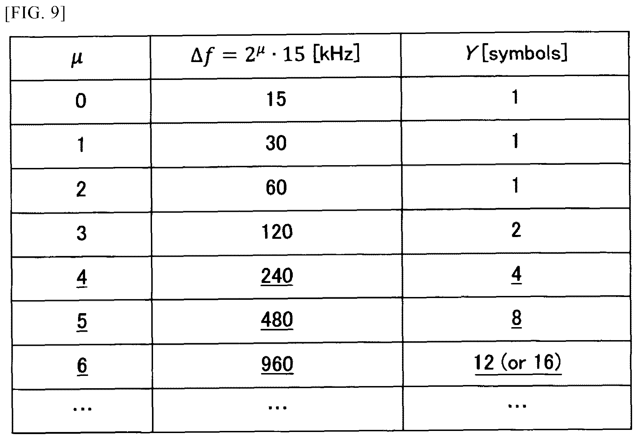

FIG. 9 shows an example of the table information in Example 1-1. In the example in FIG. 9, when SCS is 240 kHz, 4 is used for Y; when SCS is 480 kHz, 8 is used for Y; and when SCS is 960 kHz, 12 or 16 is used for Y.

Note that the information shown in FIG. 9 is an example. For example, when SCS is 240 kHz, Y may be 1, 2 or 3. When SCS is 480 kHz, Y may be 1, 2, 3, 4, 5, 6 or 7. When SCS is 960 kHz, Y may be 1, 2, 3, 4, 5, 6, 7, 8, 9, 10, 11, 13 or 14.

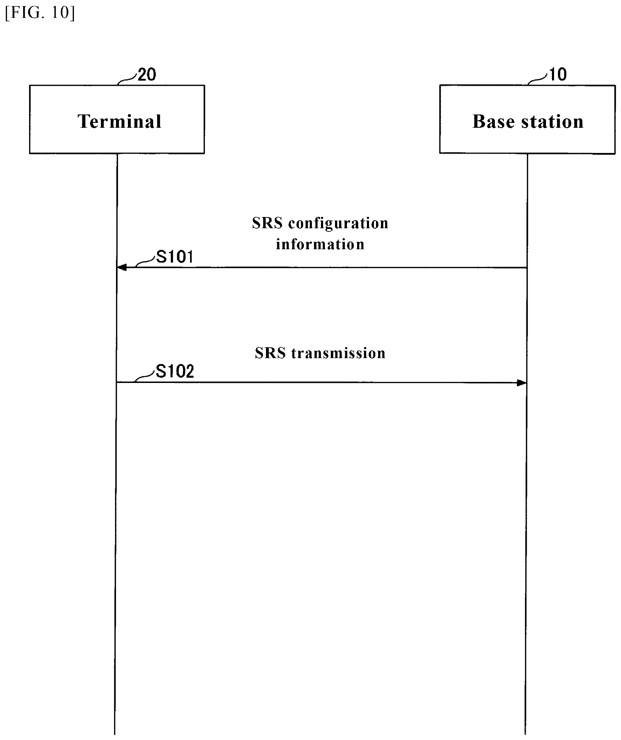

The operation example in Example 1-1 is described with reference to FIG. 10. The table information in FIG. 9 is configured in each of the terminal 20 and the base station 10. In addition, here signal transmission and reception between the terminal 20 and the base station 10 is performed at SCS=480 kHz, and the base station 10 configures a plurality of SRS resources per SRS resource set for the terminal 10.

The base station 10 learns from the table information in FIG. 9 that the minimal guard period corresponding to 480 kHz is 8 symbols, and transmits to the terminal 20 SRS resource set configuration information (usage = antenna switching) containing a plurality of SRS resource configurations in which the interval between multiple resources is set to 8 or more symbols (S101).

The terminal 20 learns from the table information in FIG. 9 that the minimal guard period corresponding to 480 kHz is 8 symbols, and transmits a plurality of SRS at intervals of 8 symbols or more using a plurality of SRS resources configured from the base station 10 (S102) . The base station 10 receives a plurality of SRS transmitted from the terminal 20 and having intervals of 8 symbols or more.

The terminal 20 can perform SRS transmission according to the configuration information configured from the base station 10 without referring to the table information in FIG. 9. In this case, the terminal 10 uses a plurality of SRS resources configured from the base station 10 to transmit a plurality of SRS at intervals of 8 symbols or more.

### <Example 1-2>

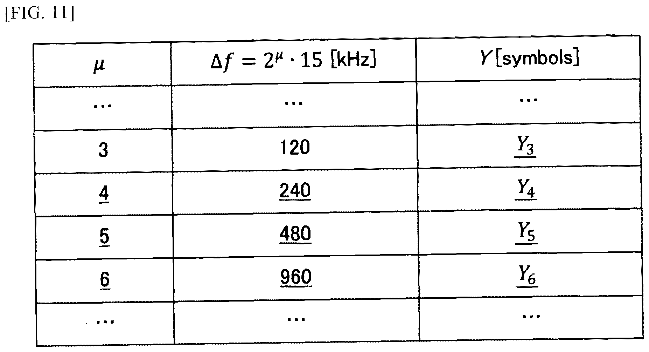

Next, Example 1-2 is described. In Example 1-2, for example, the table information shown in FIG. 11 is stipulated in the specification and the like. A base station 10 and a terminal 20 hold the table information in advance.

As shown in FIG. 11, the value of Y corresponding to each SCS is a variable in the table information. In Example 1-2, the value of the variable is determined from the candidate variable values by UE capability (capability information of the terminal 20).

For example, in FIG. 11, candidate values for Y₃ are 1 and 2, candidate values for Y₄ are 1, 2, 3 and 4, candidate values for Y₅ are 1-8, and candidate values for Y₆ are 1-16.

For example, the terminal 20 transmits capability information for Y for each SCS to the base station 20 and the base station 20 determines Y for each SCS based on the capability information. The "capability information for Y" may be a minimum value of Y that the terminal 20 can use, a value of Y that the terminal 10 wants to use, or information other than Y.

As an example, when the terminal 20 notifies the base station 10 of Y₄=3 as capability information for Y for SCS=240 kHz, the base station 10 allocates a plurality of SRS resources to the terminal 20 using Y=3 at SCS=240 kHz.

In addition, the terminal 20 transmits capability information for Y for each of a plurality of SCS to the base station 20 and the base station 20 determines Y for each SCS based on that capability information. For example, the terminal 20 transmits capability information comprising four values, such as (Y₃, Y₄, Y₅, Y₆), to the base station 20.

The base station 10 knows that the first value in the capability information is capability information for Y at 120 kHz, the second value is capability information for Y at 240 kHz, the third value is capability information for Y at 480 kHz, and the fourth value is capability information for Y at 960 kHz. The base station 20 determines the value of Y based on capability information for Y corresponding to the SCS used. The "Capability information for Y" is as described above.

Note that the same operation that determines Y based on "capability information for Y" in the base station 10 can be performed in the terminal 20. In other words, the terminal 20 can determine the value of Y based on its own capability information.

In addition, with respect to configuration of SRS resource for a plurality of terminals (configuration for multiplexing SRS resources between a plurality of terminals), the base station 10 may be implemented using, for example, a value for the lowest capability information among the capability information received from the plurality of terminals. For example, SRS resources are configured for a plurality of terminals, with a value of Y corresponding to the lowest capability information assumed.

Alternatively, the base station 10 may configure SRS resources for a plurality of terminals using a value for the highest capability information among the capability information received from the plurality of terminals. For example, SRS resources may be configured for a plurality of terminals, with a value of Y corresponding to the highest capability information assumed.

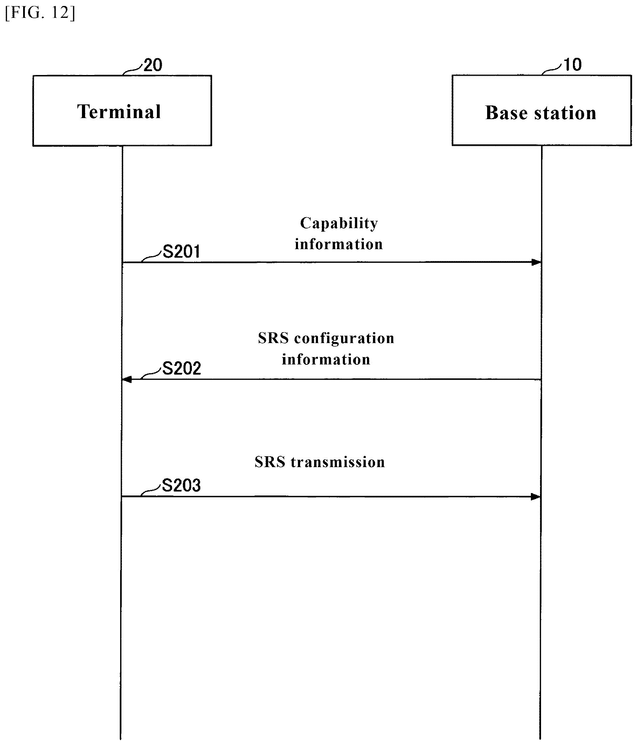

The operation example in Example 1-2 is described with reference to FIG. 12. In S201, a terminal 20 transmits capability information to a base station 10. The capability information contains, for example, capability information for Y for each SCS.

When determining that SCS=480 kHz is used for communication with the terminal 20, the base station 10 determines a value of Y corresponding to SCS=480 kHz from capability information for Y received in S201, creates configuration information of SRS resources using the Y value, and transmits the configuration information to the terminal 20 (S202). In S203, the terminal 20 transmits SRS based on the configuration information received from the base station 10.

### <Example 1-3>

Next, Example 1-3 is described. In Example 1-3, candidate values of Y for each SCS are notified from a base station 10 to a terminal 20 by RRC signaling. The terminal 20 determines a value of Y corresponding to itself from the candidate values notified.

For example, as shown in FIG. 8, the base station 10 holds table information in which a value for each SCS (or potential values in the case of multiples) is described. The base station 10 notifies the terminal 20 of the table information by RRC signaling.

The terminal 20 determines, for example, a Y value for actual use (reference) corresponding to an SCS to be used according to its own capability information. The base station 10 determines the value of Y for the terminal 20 based on the capability information for Y received from the terminal 20, as in Example 1-2.

In addition, instead of determining the value of Y by the terminal 20 itself, the base station 10 may notifies the terminal 20 of the Y value determined based on the capability information of the terminal 20 (or an index pointing to information in the table information set by RRC), for example, by MAC CE or DCI.

### (Example 2)

Next, Example 2 is described. Example 2 may be implemented in combination with Example 1, and may also be implemented independently of Example 1.

In the technology stipulated in Non-Patent Reference 1, the number of SRS resources in an SRS resource set for antenna switching is two or four in 1T2R, 2T4R, 1T4R, etc. In addition, in the technology stipulated in Non-Patent Reference 1, up to two SRS resource sets can be configured by one SRS resource set in a terminal 20.

On the other hand, in Example 2, it is stipulated in the specification and the like that at most N SRS resources are configured by an SRS resource set for antenna switching, and the terminal 20 and the base station 10 operate according to the stipulation. More specifically, for example, the following is stipulated, and the terminal 20 and the base station 10 operate according to the stipulation.

"For xTyR, z SRS resource sets configured with a different value for the higher layer parameter resourceType in SRS-ResourceSet, where each SRS resource set has at most N SRS resources/port, ..."

In other words, it is stipulated that a terminal 20 with capability of x transmissions and y receptions is configured with z SRS resource sets and each SRS resource set is configured with at most N SRS resources per SRS port, and the terminal 20 and the base station 10 operate according to the stipulation. Note that the "at most N SRS resources per SRS port" may be "at most N SRS resources per slot". The "at most N SRS resources per SRS port" may be "at most N SRS resources per slot", and the same applies to the description below.

More specific examples related to x, y, z and N are described below as Examples 2-1 to 2-4.

### <Example 2-1>

Example 2-1 is an example of the number z of SRS resource sets configured in the terminal 20. Examples 2-1-1 to 2-1-3 are described as variations.

### <Example 2-1-1>

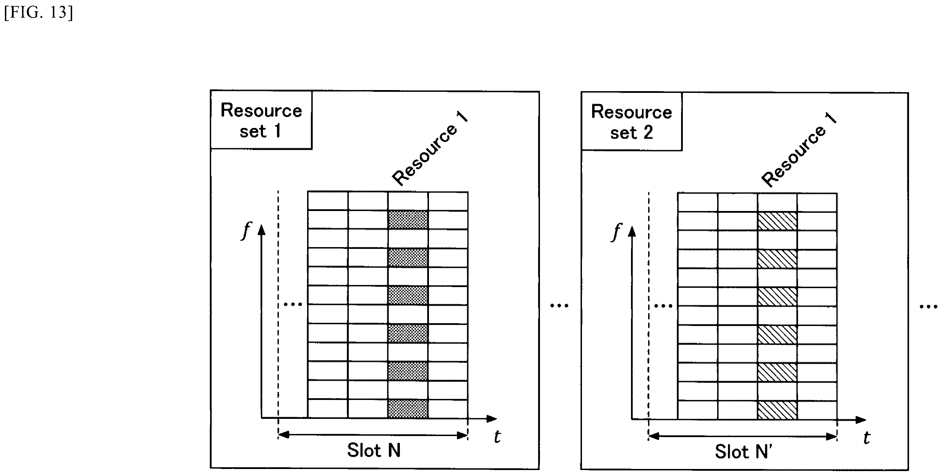

In Example 2-1-1, the number z of SRS resource sets configured in the terminal 20 is stipulated as a fixed value. The terminal 20 and the base station 10 operate according to the fixed value. As an example, where z=2 and N=1, an example of an SRS resource configured for a terminal 20 by a base station 10 is shown in FIG. 13.

In FIG. 13, an SRS resource set 1 is configured in a certain slot N, and an SRS resource 2 is configured in another slot N'. In this example, an SRS resource 1 in the slot N is configured by an SRS resource set 1 and an SRS resource 1 in the slot N' is configured by the SRS resource set 2.

In this example, as shown in FIG. 13, the SRS resource 1 of the SRS resource set 1 and the SRS resource 1 of the SRS resource set 2 are in the same position in one slot. The terminal 20 configured with such an SRS resource for antenna switching is able to transmit a plurality of SRS resources for DL CSI acquisition at intervals of one slot (e.g., 14 symbols) or more.

In addition, when the terminal 20 transmits a plurality of SRS resources in one slot, it is not able to transmit signals between the SRS resources, but in the configuration shown in FIG. 13, since one SRS resource is transmitted per one slot, no guard period in which signals cannot be transmitted occurs. Therefore, the number of symbols that cannot be used for transmission can be reduced.

### <Example 2-1-2>

In Example 2-1-2, the number z of SRS resource sets configured in a terminal 20 is stipulated as a fixed value based on the x and y in the transmission capability xTyR of the terminal 20. The terminal 20 and the base station 10 operate according to the fixed value.

For example, z=ceil(y/x) may be used, or z=floor(y/x) may be used. Ceil is for rounding up, and floor is for rounding down. For example, in the case of 2T4R, z=2 is obtained according to any of the formulas. At this time, if N=1, configuration of SRS resources is performed as in FIG. 13.

### <Example 2-1-3>

The number z of SRS resource sets configured in a terminal 20 may be, for example, determined by a base station 10, and the value determined for z may be notified to the terminal 20 by RRC signaling as the number of SRS resource sets for antenna switching. A terminal 20 that has received z can assume that z SRS resource sets are configured for antenna switching.

The base station 10 can determine a value for z, for example, based on the x and y in the transmission capability xTyR received from the terminal 20, as described in Example 2-1-2.

In addition, the base station 10 may notify the terminal 20 of a plurality of candidate values for z by RRC signaling, and notify the terminal 20 of the z value actually used by MAC CE or DCI.

### <Example 2-2>

In Example 2-2, when z is stipulated in the specification and the like, variations of a described method of a portion related to z are described in Examples 2-2-1 to 2-2-3. In any case, the terminal 20 and the base station 10 operate according to the description. In any case, the value of z below may be determined using the method described in Example 2-1-2.

### <Example 2-2-1>

A described example of Example 2-2-1 is as follows.

"For xTyR, z SRS resource sets configured with a different value for the higher layer parameter resourceType in SRS-ResourceSet, where each SRS resource set has at most N SRS resources/port, ..."
z is a fixed value. In other words, it is stipulated that z SRS resource sets are configured for a terminal 20 with capability of x transmissions and y receptions.

### <Example 2-2-2>

A described example of Example 2-2-2 is as follows.

"For xTyR, at least z SRS resource sets configured with a different value for the higher layer parameter resourceType in SRS-ResourceSet, where each SRS resource set has at most N SRS resources/port, ..."

In other words, it is stipulated that at least z SRS resource sets are configured for a terminal 20 with capability of x transmissions and y receptions.

### <Example 2-2-3>

A described example of Example 2-2-3 is as follows.

"For xTyR, a value from z1 to z2 of SRS resource sets configured with a different value for the higher layer parameter resourceType in SRS-ResourceSet, where each SRS resource set has at most N SRS resources/port, ..."

In other words, it is stipulated that the number of SRS resource sets configured is a value from z1 to z2 for a terminal 20 with capability of x transmissions and y receptions.

### <Example 2-3>

Next, Example 2-3 is described. In Example 2, it is stipulated as described above that at most N SRS resources are configured in an SRS resource set for antenna switching, and an example of the determination of N is described in Example 2-3. Examples 2-3-1 to 2-3-4 are described below as variations.

### <Example 2-3-1>

In Example 2-3-1, the upper limit N (or the value N) of the number of SRS resources in each SRS resource set configured in a terminal 20 is stipulated as a fixed value. The fixed value is, for example, 1, 2 or 3. When N=1 and the number of SRS resource sets is two, configuration is performed as shown in FIG. 13.

### <Example 2-3-2>

In Example 2-3-2, the upper limit N (or the value N) of the number of SRS resources in each SRS resource set configured in a terminal 20 is a number set based on the y in the transmission capability xTyR of the terminal 20 and is stipulated as a fixed value. The terminal 20 and the base station 10 operate according to the fixed value.

As an example, if y is greater than a certain value Y' (e.g., 2), N is stipulated as a specific value N' (e.g., 1). In this example, Y' and N' are stipulated in advance, and N may not be stipulated in advance.

For example, a base station 10 compares y and Y' based on the transmission capability information xTyR from a terminal 20, and determines N to be a specific value N' (e.g., 1) when y is greater than a certain value Y' (e.g., 2) . The base station 10 configures an SRS resource as shown, for example, in FIG. 13, based on the value determined.

In addition, a terminal 10 compares y and Y' based on its own transmission capability information xTyR, and determines N to be a specific value N' (e.g., 1) when y is greater than a certain value Y' (e.g., 2) . The terminal 20 assumes that an SRS resource is configured as shown in FIG. 13, for example, based on the value determined.

### <Example 2-3-3>

In Example 2-3-3, the upper limit N (or the value N) of the number of SRS resources in each SRS resource set configured in a terminal 20 is determined, for example, by a base station 10, and notified to the terminal 20 by the base station 10 by RRC signaling (or MAC CE or DCI).

The base station 10 may determine N, for example, by the same method described in Example 2-3-2.

That is, the base station 10 compares y and Y' based on the transmission capability information xTyR from a terminal 20, determines N to be a specific value N' (e.g., 1) when y is greater than a certain value Y' (e.g., 2), and notifies N to the terminal 20. The terminal 20, for example, assumes that an SRS resource is configured as shown in FIG. 13.

In addition, instead of or in addition to notifying the terminal 20 of N, the base station 10 may notify the terminal 20 of Y' and N' by RRC signaling (or MAC CE or DCI). The terminal 20 compares y and Y' based on its own transmission capability information xTyR, and determines N to be N' (e.g., 1) when y is greater than Y' (e.g., 2).

### <Example 2-3-4>

In Example 2-3-4, whether N is set to a specific value N' (e.g., 1) is determined according to whether or not a terminal 20 is provided (or configured) with a multi-panel antenna.

For example, when a base station 10 determines, according to the capability information from the terminal 20, that the terminal 20 is provided with a multi-panel antenna, it determine N to be N' and configures an SRS resource (e.g., FIG. 13).

### <Example 2-4>

Next, Example 2-4 is described. In Example 2, it is stipulated as described above that at most N SRS resources are configured in each SRS resource set for antenna switching; in Example 2-4, a condition for applying such specification (that is, a condition for performing an operation based on the stipulation) is described. Examples 2-4-1 to 2-4-5 are described below as variations.

The "specific operation" described below may be the operation of Example 2-1, or the operation of Example 2-2, or the operation of Example 2-3. In addition, the "specific operation" described below may be the operation of Example 1-1 or the operation of Example 1-2. In addition, any two or more of Examples 2-4-1 to 2-4-5 may be used in combination. In the examples below, a terminal 20 and a base station 10 each determine a condition, but either one (for example the base station 10) may determine the condition, and the result (performing a specific operation) may be notified to the other (e.g., the terminal 20).

### <Example 2-4-1>

In Example 2-4-1, a terminal 20 and a base station 10 each execute a specific operation when an SCS used for transmitting/receiving signals is greater (or less) than a specific value. For example, the terminal 20 and the base station 10 each execute a specific operation when an SCS used for transmitting/receiving signals is greater than 120 kHz (or 240 kHz).

### <Example 2-4-2>

In Example 2-4-2, a terminal 20 and a base station 10 each execute a specific operation when the FR (Frequency Range) to be used includes a frequency band above a specific value. For example, the terminal 20 and the base station 10 each execute a specific operation when the FR (Frequency Range) to be used includes a frequency band above 52.5 GHz.

### <Example 2-4-3>

In Example 2-4-3, a terminal 20 and a base station 10 each determine whether to execute a specific operation based on whether x (or y) in the transmission capability xTyR of the terminal 20 is less (or greater) than a specific value. For example, the terminal 20 and the base station 10 are each determined to execute a specific operation when y (which can also be called a UE antenna port number) in the transmission capability xTyR of the terminal 20 is less than a specific value y1. y1 may be 2 or 3, or may be a value greater than 3.

### <Example 2-4-4>

In Example 2-4-4, a terminal 20 and a base station 10 each determine whether to execute a specific operation based on whether the difference between x and y or the ratio of x to y in the transmission capability xTyR of the terminal 20 is greater (or less) than a specific value. For example, the terminal 20 and the base station 10 are each determined to execute a specific operation when x/y in the transmission capability xTyR of the terminal 20 is greater than a specific value r. r may be 0.5, 0.33 or other values.

### <Example 2-4-5>

In Example 2-4-5 a terminal 20 and a base station 10 each determine whether to execute a specific operation based on the capability information (UE capability) of the terminal 20. For example, the terminal 20 may transmit capability information indicating whether or not a specific operation can be executed to the base station 10, and the base station 10 may notify the terminal 20 of a determination result (e.g., executing a specific operation) based on the capability information by RRC signaling (or MAC CE or DCI).

### (Example 3)

Next, Example 3 is described. Example 3 may be implemented in combination with Example 1, and may also be implemented independently of Example 1. In addition, Example 3 may be implemented in combination with Example 2, and may also be implemented independently of Example 2. In addition, Example 3 may be implemented in combination with Examples 1 and 2, and may also be implemented independently of Examples 1 and 2.

In the technology stipulated in Non-Patent Reference 1, the number of SRS resources in an SRS resource set for antenna switching is two in 1T2R, 2T4R, etc.

On the other hand, in Example 3, it is stipulated in the specification and the like that more than two SRS resources can be configured in an SRS resource set for antenna switching, and the terminal 20 and the base station 10 operate according to the stipulation. Note that it is not assumed that two or more SRS resource set is configured in the same slot. More specifically, for example, the following is stipulated, and the terminal 20 and the base station 10 operate according to the stipulation.

"For xTyR, up to z SRS resource set(s) configured with a different value for the higher layer parameter resourceType in SRS-ResourceSet, where each SRS resource set has up to three SRS resources transmitted in different symbols, each SRS resource in a given set consisting of two SRS ports, and the SRS port pair of the second resource is associated with a different UE antenna port pair than the SRS port pair of the first resource"

In other words, it is stipulated that a terminal 20 with capability of x transmissions and y receptions configures z SRS resource sets and each SRS resource set configures at most N SRS resources, and the terminal 20 and the base station 10 operate according to the stipulation. N is, for example, 3. z is, for example, 1. z may be determined using the method described in Example 2.

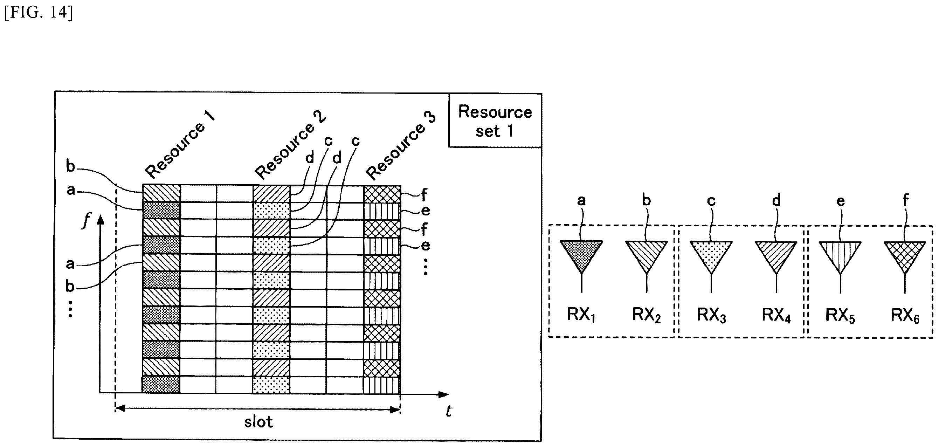

As an example, where z=1 and N=3, an example of an SRS resource set (and an SRS resource included therein) configured for a terminal 20 by a base station 10 is shown in FIG. 14. This example is an example where the terminal 20 has the capability of 2T6R.

In FIG. 14, SRS resource 1, SRS resource 2, and SRS resource 3 are configured in one slot. The terminal 20, for example, performs SRS transmission through SRS port 0 and SRS port 1 in an SRS resource 1 (a and b in FIG. 14), performs SRS transmission through SRS port 0 and SRS port 1 in an SRS resource 2 (c and d in FIG. 14), and performs SRS transmission through SRS port 0 and SRS port 1 in an SRS resource 3 (e and f in FIG. 14).

Thus, by configuring more than two SRS resources in one SRS resource set, in antenna switching, that is, in DL CSI acquisition, the terminal 20 can perform many SRS transmissions within a short period (in one slot). However, since there is a need to provide a guard period as described in Example 1, there is an upper limit to the number of SRS resources that can be configured in one SRS resource set. The upper limit is, for example, 3. The upper limit may be 4, 5, 6 or 7 according to the SCS.

Note that although FIG. 14 shows an example in which SRS is transmitted three times in one slot, the same transmission as that in one slot in FIG. 14 may be performed in a plurality of slots. That transmission in a plurality of slots may be a repetition of the SRS resource set 1 shown in FIG. 14 or a transmission by an SRS resource set different from the SRS resource set 1.

### <Application Conditions>

In Example 3, a condition for performing a specific operation may be used as in Example 2-4. Here, Example 3-1 to Example 3-5 are described as variations. The "specific operation" described below is the operation of Example 3. In the examples below, a terminal 20 and a base station 10 each determine a condition, but either one (for example the base station 10) may determine the condition, and the result (performing a specific operation) may be notified to the other (e.g., the terminal 20).

### <Example 3-1>

In Example 3-1, a terminal 20 and a base station 10 each execute a specific operation when an SCS used for transmitting/receiving signals is greater (or less) than a specific value. For example, the terminal 20 and the base station 10 each execute a specific operation when an SCS used for transmitting/receiving signals is greater than 120 kHz (or 240 kHz).

### <Example 3-2>

In Example 3-2, a terminal 20 and a base station 10 each execute a specific operation when the FR (Frequency Range) to be used includes a frequency band above a specific value. For example, the terminal 20 and the base station 10 each execute a specific operation when the FR (Frequency Range) to be used includes a frequency band above 52.5 GHz.

### <Example 3-3>

In Example 3-3, a terminal 20 and a base station 10 each determine whether to execute a specific operation based on whether x (or y) in the transmission capability xTyR of the terminal 20 is greater (or less) than a specific value. For example, the terminal 20 and the base station 10 are each determined to execute a specific operation when y (which can also be called a UE antenna port number) in the transmission capability xTyR of the terminal 20 is greater than a specific value y1. y1 may be 1, 2 or 3, or may be a value greater than 3.

### <Example 3-4>

In Example 3-4, a terminal 20 and a base station 10 each determine whether to execute a specific operation based on whether the difference between x and y or the ratio of x to y in the transmission capability xTyR of the terminal 20 is less (or greater) than a specific value. For example, the terminal 20 and the base station 10 are each determined to execute a specific operation when x/y in the transmission capability xTyR of the terminal 20 is less than a specific value r. r may be 0.5, 0.33 or other values.

### <Example 3-5>

In Example 3-5 a terminal 20 and a base station 10 each determine whether to execute a specific operation based on the capability information (UE capability) of the terminal 20. For example, the terminal 20 may transmit capability information indicating whether or not a specific operation can be executed to the base station 10, and the base station 10 may notify the terminal 20 of a determination result (e.g., executing a specific operation) based on the capability information by RRC signaling (or MAC CE or DCI).

According to any of Examples 1-3, it is possible to appropriately transmit an SRS for acquiring channel state information of a downlink in the terminal 20.

### (Device configuration)

Next, an example of a functional configuration of the base station 10 and the terminal 20 that execute processes and operations described so far is described.

### <Base station 10>

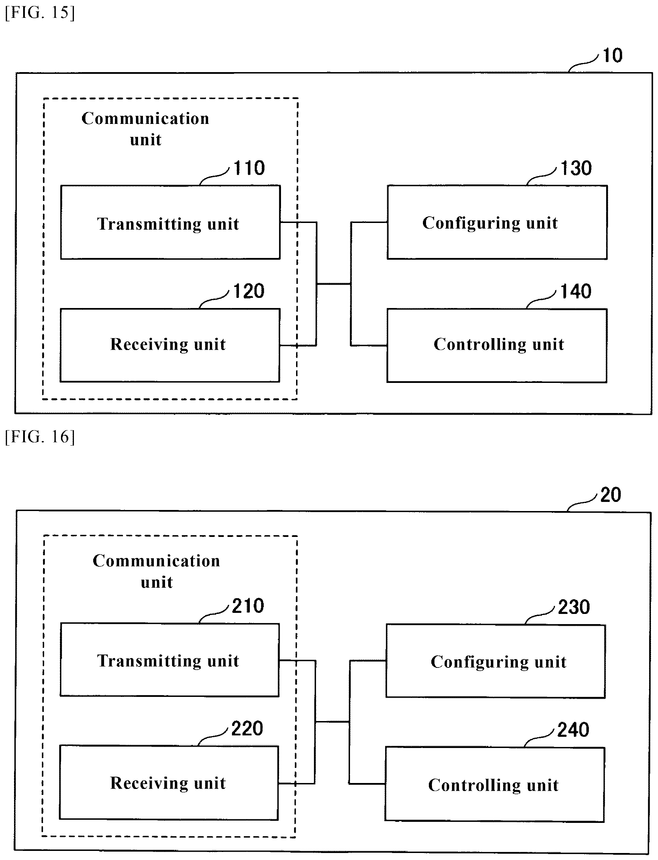

FIG. 15 is a diagram showing an example of a functional configuration of a base station 10. As shown in FIG. 15, the base station 10 has a transmitting unit 110, a receiving unit 120, a configuring unit 130 and a controlling unit 140. The functional configuration shown in FIG. 15 is only an example. Any functional classification and any functional unit name may be used as long as the operations according to the embodiments of the present invention can be performed. In addition, the transmitting unit 110 and the receiving unit 120 may be collectively referred to as a communication unit.

The transmitting unit 110 has a function of generating a signal to be transmitted to the terminal 20 side and transmitting the signal wirelessly. The receiving unit 120 has a function of receiving various signals transmitted from the terminal 20 and acquiring information of, for example, a higher layer from the received signals. The transmitting unit 110 also has a function of transmitting NR-PSS, NR-SSS, NR-PBCH, DL/UL control signals, PDCCH-based DCI, PDSCH-based data and the like to the terminal 20.

The configuring unit 130 stores, in the storage device comprised therein, the pre-configured configuration information and various configuration information to be transmitted to the terminal 20 and reads them from the storage device if necessary.

The controlling unit 140 performs scheduling of DL reception and UL transmission for the terminal 20 via the transmitting unit 110. The controlling unit 140 also has a function of creating configuration information of an SRS resource. The functional unit related to signal transmission in the controlling unit 140 may be included in the transmitting unit 110, and the functional unit related to signal reception in the controlling unit 140 may be included in the receiving unit 120. In addition, the transmitting unit 110 may be called a transmitter, and the receiving unit 120 may be called a receiver.

### <Terminal 20>

FIG. 16 is a diagram showing an example of a functional configuration of a terminal 20. As shown in FIG. 16, the terminal 20 comprises a transmitting unit 210, a receiving unit 220, a configuring unit 230, and a controlling unit 240. The functional configuration shown in FIG. 12 is only an example. Any functional classification and any functional unit name may be used as long as the operations according to the embodiments of the present invention can be performed. The transmitting unit 210 and the receiving unit 220 may be collectively referred to as a communication unit.

The transmitting unit 210 generates a transmission signal from the transmission data and transmits the transmission signal wirelessly. The receiving unit 220 receives various signals wirelessly and acquires a signal of a higher layer from the received signal of a physical layer. The receiving unit 220 also has a function of receiving NR-PSS, NR-SSS, NR-PBCH, DL/UL/SL control signals, PDCCH-based DCI, PDSCH-based data and the like transmitted from the base station 10. In addition, for example, the transmitting unit 210 may transmit a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like to other terminals 20 as D2D communication, and the receiving unit 120 may receive a PSCCH, a PSSCH, a PSDCH, a PSBCH, and the like from other terminals 20.

The configuring unit 230 stores, in the storage device comprised therein, various configuration information received from the base station 10 or other terminals via the receiving unit 220 and reads it from the storage device if necessary. The configuring unit 230 also stores pre-configured configuration information. The controlling unit 240 controls the terminal 20. The controlling unit 240 also has a function of performing controlling so as to not transmit signals in the guard period by referring to a guard period that is stipulated, notified or determined.

### <Summary>

According to the present embodiments, at least a terminal and a base station shown in the following items are provided.

### (Item 1)

A terminal comprising a receiving unit for receiving, from a base station, resource configuration information of an SRS (sounding reference signal) for antenna switching, and
a transmitting unit for transmitting a plurality of SRS with a guard period of a number of symbols greater than a specific number of symbols based on the resource configuration information.

### (Item 2)

The terminal according to item 1, wherein when a subcarrier spacing used by the terminal is 240 kHz or greater, the specific number of symbols is 2.

### (Item 3)

The terminal according to item 1 or 2, wherein one or more SRS resource sets are configured according to the resource configuration information, and the SRS resource sets each contain a number of SRS resources equal to or less than a specific number;
the transmitting unit transmits SRS through the number of SRS resources equal to or less than a specific number in each of a plurality of slots in which the plurality of SRS resource sets are configured.

### (Item 4)

The terminal according to item 3, wherein the number of SRS resources equal to or less than a specific value is one.

### (Item 5)

A base station comprising a transmitting unit for transmitting resource configuration information of an SRS (sounding reference signal) for antenna switching to a terminal, and
a receiving unit for receiving, from the terminal, a plurality of SRS transmitted with a guard period of a number of symbols greater than a specific number of symbols based on the resource configuration information.

### (Item 6)

The base station according to item 5, comprising a controlling unit for determining the number of SRS resource sets in the SRS resource configuration information or the number of SRS resource per SRS resource set based on capability information indicating x transmissions and y receptions received from the terminal.

According to any of the configurations described above, provided is a technology that enables an SRS for acquiring channel state information of a downlink to be appropriately transmitted in a terminal.

### (Hardware configuration)

Block diagrams (FIG. 15 and FIG. 16) used in the description of the embodiments above show blocks of each function unit. These functional blocks (configuration units) are achieved by any combination of at least one of hardware and software. Further, the method of achieving each functional block is not particularly limited. That is, each functional block may be achieved by using one physically or logically coupled device, by directly or indirectly (for example, in a wired or wireless manner) connecting two or more physically or logically separated devices, and by using these multiple devices. The functional block may be achieved by combining software with the one device above or the plurality of devices above.

The functions include, but are not limited to, judging, deciding, determining, computing, calculating, processing, deriving, investing, searching, confirming, receiving, transmitting, outputting, accessing, resolving, choosing, selecting, establishing, comparing, assuming, expecting, treating, broadcasting, notifying, communicating, forwarding, configuring, reconfiguring, allocating, mapping, assigning, etc. For example, a functional block (configuration unit) that makes transmission function is called a transmitting unit or a transmitter. As described above, neither of these methods is specifically limited.

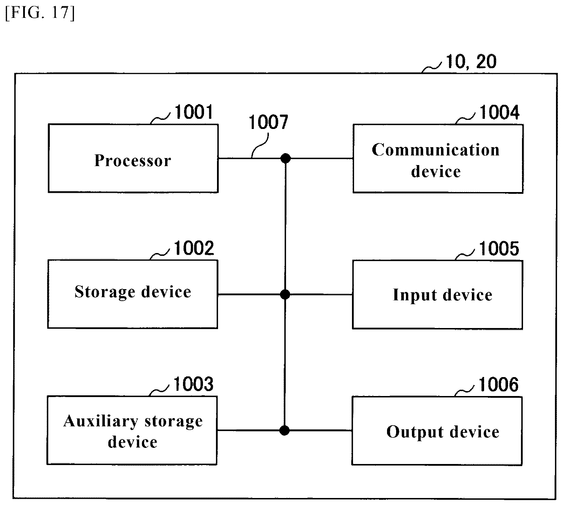

For example, the base station 10, the terminal 20 and the like in one embodiment of the present disclosure may function as a computer that processes the wireless communication methods of the present disclosure. FIG. 17 is a diagram showing an example of a hardware configuration of the base station 10 and the terminal 20 according to an embodiment of the present disclosure. The base station 10 and the terminal 20 above may be physically configured as a computer device including a processor 1001, a storage device 1002, an auxiliary storage device 1003, a communication device 1004, an input device 1005, an output device 1006, a bus 1007 and the like.

In the following description, term "device" can be understood as a circuit, a device, a unit and the like. A hardware configuration of the base station 10 and the terminal 20 may be configured to include one or more of the devices shown in the drawings or may be configured to not include some of the devices.

Each function in the base station 10 and the terminal 20 is achieved by the processor 1001 to perform calculation by loading a predetermined software (a program) on hardware such as the processor 1001 and the storage device 1002, by controlling communication by the communication device 1004, and by controlling at least one of reading and writing data on the storage device 1002 and the auxiliary storage device 1003.

The processor 1001, for example, operates an operating system to control the entire computer. The processor 1001 can be configured as a central processing unit (CPU) including an interface with a peripheral equipment, a control device, an arithmetic device, a register, and the like. For example, the controlling unit 140, the controlling unit 240 and the like above may be achieved by the processor 1001.

Further, the processor 1001 reads a program (a program code), a software module, data and the like from at least one of the auxiliary storage device 1003 and the communication device 1004 into the storage device 1002, and performs various processes according to the program, the software module and the data. For the program, a program that causes a computer to perform at least some of the operations described in the above embodiments is used. For example, the controlling unit 140 of the base station 10 shown in FIG. 15 may be included in the storage device 1002 and achieved by a control program operated on the processor 1001. Further, for example, the controlling unit 240 of the terminal 20 shown in FIG. 16 may be included in the storage device 1002 and achieved by a control program operated on the processor 1001. Although it has been described that the various processes described above are performed by one processor 1001, these processes may be performed simultaneously or sequentially by two or more processors 1001. The processor 1001 may be implemented by one or more chips. The program may be transmitted from a network via a telecommunication line.

The storage device 1002 is a computer-readable recording medium, and may be configured by at least one of ROM (Read Only Memory), EPROM (Erasable Programmable ROM), EEPROM (Electrically Erasable Programmable ROM), RAM (Random Access Memory), etc. The storage device 1002 may be called a register, a cache, a main memory (a main storage device) and the like. The storage device 1002 can store a program (a program code), a software module and the like that can be operate to implement a communication method according to one embodiment of the present disclosure.

The auxiliary storage device 1003 is a computer-readable recording medium, and may be configured by at least one of, for example, an optical disk such as a CD-ROM (Compact Disc ROM), a hard disk drive, a flexible disk, an optical magnetic disk (for example, a compact disk, a digital versatile disk, Blu-ray (registered trademark) disk), a smart card, a flash memory (for example, a card, a stick, a key drive), a floppy (registered trademark) disk, and a magnetic strip. The storage medium described above may be, for example, a database, a server or other suitable mediums including at least one of the storage device 1002 and the auxiliary storage device 1003.

The communication device 1004 is hardware (a transmitting/receiving device) for communicating between computers via at least one of a wired network and a wireless network, and is also referred to as, for example, a network device, a network controller, a network card, and a communication module. The communication device 1004 may be configured to include, for example, a high frequency switch, a duplexer, a filter, and a frequency synthesizer in order to achieve at least one of frequency division duplex (FDD) and time division duplex (TDD). For example, a transmitting/receiving antenna, an amplifier unit, a transmitting/receiving unit, a transmission line interface and the like may be achieved by the communication device 1004. The transmission/receiving unit may be implemented in a physically or logically separated manner between the transmitting unit and the receiving unit.

The input device 1005 is an input device (for example, a keyboard, a mouse, a microphone, a switch, a button, and a sensor) that receives input from outside. The output device 1006 is an output device (for example, a display, a speaker, and an LED lamp) that performs output to outside. The input device 1005 and the output device 1006 may have an integrated configuration (for example, a touch panel).

Further, each device such as the processor 1001 and the storage device 1002 is connected by a bus 1007 for communicating information. The bus 1007 may be configured by using a single bus, or may be configured by using a different bus for each device.

Further, the base station 10 and the terminal 20 may be configured to include hardware such as a microprocessor, a digital signal processor (DSP), an application specific integrated circuit (ASIC), a programmable logic device (PLD), and a field programmable gate array (FPGA), and some or all of the functional blocks may be achieved by the hardware. For example, the processor 1001 may be implemented using at least one of these hardware.

### (Supplement to embodiments)

Although the embodiments of the present invention have been described above, the disclosed inventions are not limited to such embodiments, and those skilled in the art will understand various modifications, corrections, alternatives, substitutions and the like. Although explanations have been given using specific numerical examples in order to promote understanding of the present invention, these numerical values are merely examples and any appropriate values may be used unless otherwise specified. Classification of items in the above description is not essential to the present invention, and elements described in two or more items may be used in combination as necessary, and an element described in one item may be applied to another element (as long as there is no contradiction) described in other items. A boundary of the functional unit or the processing unit in the functional block diagram does not necessarily correspond to a boundary of the physical components. Operations of the plurality of functional units may be physically performed by one component, or operations of one functional unit may be physically performed by a plurality of components. For the processing procedure described in the embodiments, the processing order may be changed as long as there is no contradiction. For convenience of description of processing, although the base station 10 and the terminal 20 have been described with reference to functional block diagrams, such devices may be implemented in hardware, software, or a combination thereof. Software operated by a processor of the base station 10 according to the embodiment of the present invention and software operated by a processor of the terminal 20 according to the embodiment of the present invention respectively may be stored in a random access memory (RAM), a flash memory, a read-only memory (ROM), EPROM, EEPROM, a register, a hard disk (HDD), a removable disk, CD-ROM, a database, a server or any other suitable storage medium.

Further, the notification of information is not limited to the aspects/embodiments described in the present disclosure, and may be performed by using other methods. For example, the notification of information may be implemented by physical layer signaling (e.g., DCI (Downlink Control Information), and UCI (Uplink Control Information)), higher layer signaling (e.g., RRC (Radio Resource Control) signaling, MAC (Medium Access Control) signaling, and notification information (MIB (Master Information Block), SIB (System Information Block))), other signals, or combinations thereof. Further, RRC signaling may be called an RRC message and may be, for example, an RRC connection setup message, and an RRC connection reconfiguration message.

Each aspect/embodiment described in the present disclosure may be applied to at least one of LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), a system using other suitable systems, and a next generation system expanded based on them. Further, a plurality of systems may be applied in a combination (for example, a combination of at least one of LTE and LTE-A and 5G).

The order of processing procedures, sequences, flowcharts, etc. of each aspect/embodiment described in the present specification may be changed as long as there is no contradiction. For example, the methods described in the present disclosure present elements of various steps using exemplary orders, and are not limited to the particular order presented.

The specific operation performed by the base station 10 in the present specification may be performed by its upper node in some cases. In a network consisting of one or more network nodes having the base station 10, it is obvious that various operations performed for communication with the terminal 20 are performed by the base station 10 and at least one of other network nodes (for example, MME, and S-GW, but not limited to these) other than the base station 10. In the above example, a case where there is one network node other than the base station 10 is illustrated, but other network nodes may be a combination of a plurality of the other network nodes (for example, MME and S-GW).

The information, signals, etc. described in the present disclosure may be output from an upper layer (or a lower layer) to a lower layer (or an upper layer). Input/output may be performed via a plurality of network nodes.

The input/output information and the like may be stored in a specific place (for example, a memory) or may be managed using a management table. Information to be input/output may be overwritten, updated or added. The output information and the like may be deleted. The input information and the like may be transmitted to the other device.

Determination in the present disclosure may be performed by a value represented by 1 bit (0 or 1), may be performed by a true/false value (Boolean: true or false), or may be performed by comparison of numerical values (for example, comparison with a predetermined value).

Software, whether called software, firmware, middleware, microcode, hardware description language, or other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a feature and the like.

Further, software, an instruction, information and the like may be transmitted and received via a transmission medium. For example, if software uses at least one of wired technology (coaxial cable, optical fiber cable, twisted pair, digital subscriber line (DSL), etc.) and wireless technology (infrared, microwave, etc.) and is transmitted from a website, a server or other remote sources, at least one of these wired and wireless technologies is included within the definition of a transmission medium.

The information, signal, etc. described in the present disclosure may be represented using any of a variety of different technologies. For example, the data, the instruction, the commands, the information, the signal, the bit, the symbol, the chip, etc. may be represented by voltage, current, electromagnetic waves, magnetic field or magnetic particle, light field or photon, or any combination of these.

The terms described in the present disclosure and the terms necessary for understanding the present disclosure may be replaced with terms having the same or similar meanings. For example, at least one of the channel and the symbol may be a signal (signaling). The signal may also be a message. Further, the component carrier (CC) may be called a carrier frequency, a cell, a frequency carrier and the like.

The terms "system" and "network" used in the present disclosure are used interchangeably.

Further, the information, parameters, etc. described in the present disclosure may be represented using an absolute value, may be represented by a relative value from a predetermined value, or may be represented by other corresponding information. For example, a radio resource may be indicated by an index.

The names used for the parameters mentioned above should not be limited in any respect. Further, mathematical formulas and the like using these parameters may differ from those explicitly disclosed in the present disclosure. Since various channels (for example, PUCCH, and PDCCH) and information elements can be identified by any suitable names, various names assigned to these various channels and information elements should net be limited in any respect.

In the present disclosure, the terms "base station (BS) ", "wireless base station", "base station", "fixed station", "NodeB", "eNodeB (eNB)", "gNodeB (gNB)", "access point", "transmission point", "reception point", "transmission/reception point", "cell", "sector", "cell group", "carrier", "component carrier", etc. may be used interchangeably. The base station may be called by terms such as macrocell, small cell, femtocell and picocell.

The base station can accommodate one or more (for example, three) cells. When the base station accommodates a plurality of cells, the entire base station coverage area can be divided into a plurality of smaller areas, and each of the smaller areas can provide communication service by a base station subsystem (for example, a small indoor base station (RRH: Remote Radio Head)). The term "cell" or "sector" refers to a part or the whole of at least one of the coverage area of the base station and the base station subsystem that provides communication service in this coverage.

In the present disclosure, the terms "mobile station (MS)", "user terminal", "user equipment (UE)", "terminal", etc. may be used interchangeably.

The mobile station may be called by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be called a transmission device, a reception device, a communication device and the like. At least one of the base station and the mobile station may be a device mounted on a movable body, a movable body itself and the like. The movable body may be a vehicle (for example, a car, and an airplane), may be an unmanned movable body (for example, a drone, and a self-driving car), or may be a robot (manned or unmanned) . It should be noted that at least one of the base station and the mobile station includes a device that does not necessarily move during communication operation. For example, at least one of the base station and the mobile station may be IoT (Internet of Things) equipment such as a sensor.

Further, the base station in the present disclosure may be replaced by a terminal. For example, each aspect/embodiment of the present disclosure may be applied to a configuration in which communication between a base station and a terminal is replaced by communication between a plurality of terminals 20 (for example, called D2D (Device-to-Device), or V2X (Vehicle-to-Everything)). In this case, the terminal 20 may have the function of the base station 10 described above. In addition, terms such as "upstream" and "downstream" may be replaced by terms corresponding to communication between terminals (for example, "side") . For example, an upstream channel, a downstream channel and the like may be replaced by a side channel.

Similarly, the terminal in the present disclosure may be replaced by a base station. In this case, the base station may have the function of the terminal described above.

The term "determining" used in the present disclosure may include a wide variety of operations. "Determining" may include "determining" judging, calculating, computing, processing, deriving, investigating, looking up, search, inquiry (for example, searching in a table, a database or another data structure) and ascertaining. Further, "determining" may include "determining" receiving (e.g., receiving information), transmitting (e.g., transmitting information), input, output, and accessing (e.g., accessing data in memory). Further, "determining" may include "determining" resolving, selecting, choosing, establishing, comparing, etc. That is, "determining" may include "determining" a certain operation. Further, "determining" may be replaced by "assuming", "expecting", "considering", etc.

Terms "connected" and "coupled" or any variation thereof refer to any direct or indirect connection or coupling between two or more elements and may include the presence of one or more intermediate elements between the two "connected" or "coupled" elements each other. Connection or coupling between the elements may be physical, logical, or a combination thereof. For example, "connection" may be replaced by "access". As used in the present disclosure, the two elements use at least one of one or more wires, cables and printed electrical connections, and as some non-limiting and non-comprehensive examples, and are considered to be "connected" or "coupled" to each other using electromagnetic energy having wavelengths in a radio frequency domain, a microwave domain and a light (both visible and invisible) domain.

The reference signal may be abbreviated as RS and may be called a pilot according to the applied standard.

"Based on" as used in the present disclosure does not mean "based only on" unless otherwise stated. In other words, the phrase "based on" means both "based only on" and "based at least on".

Any reference to the elements using designations such as "first", "second" and so on as used in the present disclosure does not generally limit the quantity or order of those elements. These designations may be used in the present disclosure as a convenient method to distinguish between two or more elements. Therefore, references to the first and second elements do not mean that only two elements can be adopted, or that the first element must somehow precede the second element.

The "means" in the configuration of each of the above devices may be replaced by a "part", a "circuit", a "device" and the like.

When "include", "including" and variations thereof are used in the present disclosure, these terms are intended to be inclusive as the term "comprising". Further, the term "or" used in the present disclosure is intended not to be exclusive.

A radio frame may be configured by one or more frames in a time domain. Each frame of the one or more frames in the time domain may be called a subframe. The subframe may further be configured by one or more slots in the time domain. The subframe may be a fixed time length (for example, 1 ms) that does not depend on numerology.

The numerology may be a communication parameter that applies to at least one of transmission and reception of a signal or a channel. The numerology may indicate at least one of, for example, a subcarrier spacing (SCS), a bandwidth, a symbol length, a cyclic prefix length, a transmission time interval (TTI), a number of symbols per TTI, a wireless frame configuration, a specific windowing process performed by a transmitter/receiver to perform in a frequency domain, and a specific window wink process for the transmitter/receiver to perform in a time domain.

The slot can be configured by one or more symbols (such as OFDM (Orthogonal Frequency Division Multiplexing) symbols or SC-FDMA (Single Carrier Frequency Division Multiple Access) symbols) in the time domain. The slot may be in time units based on numerology.

The slot may include a plurality of mini slots. Each mini slot may be configured by one or more symbols in the time domain. Further, the mini slot may be called a sub slot. The mini slot may be configured by a smaller number of symbols than the slots. PDSCH (or PUSCH) transmitted in the time unit larger than the mini slot may be called PDSCH (or PUSCH) mapping type A. PDSCH (or PUSCH) transmitted using the mini slot may be called PDSCH (or PUSCH) mapping type B.

The radio frame, the subframe, the slot, the mini slot and the symbol all represent in the time unit for transmitting a signal. For the radio frame, the subframe, the slot, the mini slot and the symbol, correspondingly different names may be used.

For example, one subframe may be called a transmission time interval (TTI), a plurality of consecutive subframes may be called TTI, and one slot or one mini slot may be called TTI. That is, at least one of the subframe and TTI may be a subframe (1 ms) in existing LTE, may be a period shorter than 1 ms (for example, 1-13 symbols), or may be a period longer than 1 ms. The unit representing TTI may be called a slot, a mini slot and the like instead of the subframe. In addition, one slot can be called a unit time. Unit times may differ for each cell according to numerology.

Here, TTI refers to, for example, the minimum time unit of scheduling in wireless communication. For example, in the LTE system, the base station schedules each terminal 20 to allocate a wireless resource (a frequency bandwidth that can be used in each terminal 20, transmission power, etc.) in a TTI unit. The definition of TTI is not limited to this.

TTI may be a transmission time unit such as a channel-encoded data packet (transport block), a code block, a code word and the like, and may be a processing unit such as scheduling, link adaptation and the like. When TTI is given, the time interval (for example, a number of symbols) to which the transport block, the code block, the code word, etc. is actually mapped may be shorter than the corresponding TTI.

When one slot or one mini slot is called TTI, one or more TTI (that is, one or more slots or one or more mini slots) may be the minimum time unit for scheduling. Further, a number of slots (a number of mini slots) configuring the minimum time unit of the corresponding scheduling may be controlled.

TTI having a time length of 1 ms may be called a usual TTI (TTI in LTE, Rel. 8-12), a normal TTI, a long TTI, a usual subframe, a normal subframe, a long subframe, a slot and the like. A TTI shorter than the normal TTI may be called a shortened TTI, a short TTI, a partial TTI (a partial or fractional TTI), a shortened subframe, a short subframe, a mini slot, a subslot, a slot and the like.

The long TTI (for example, a usual TTI and a subframe) may be replaced by a TTI having a time length of more than 1 ms, and the short TTI (for example, a shortened TTI) may be replaced by a TTI having a TTI length less than the TTI length of the long TTI and of 1 ms or more.

The resource block (RB) is a resource allocation unit in the time domain and the frequency domain and may include one or more consecutive subcarriers in the frequency domain. A number of subcarriers included in RB may be the same regardless of numerology, for example, it may be 12. A number of subcarriers included in RB may be determined based on numerology.

The time domain of RB may also include one or more symbols and may be a length of one slot, one mini slot, one subframe, or one TTI. Each of one TTI, one subframe, etc. may be configured by one or more resource blocks.

Note that one or more RBs may be called a physical resource block (PRB: Physical RB), a sub-carrier group (SCG), a resource element group (REG), a PRB pair, an RB pair and the like.

Further, the resource block may be configured by one or more resource elements (REs) . For example, one RE may be a wireless resource domain of one subcarrier and one symbol.

A bandwidth part (BWP) (which may also be called a partial bandwidth) may represent a subset of consecutive common RB (common resource blocks) for a certain neurology in a certain carrier. Here, the common RB may be specified by an index of RB with respect to a common reference point of the carrier. PRB may be defined in a certain BWP and may be numbered within the corresponding BWP.

The BWPs may include a BWP for UL (UL BWP) and a BWP for DL (DL BWP). One or more BWPs may be set in one carrier for UE.

At least one of the set BWP may be active and UE may not be assumed to transmit/receive a predetermined signal/channel outside the active BWP. Further, the "cell", "carrier", etc. in the present disclosure may be replaced by "BWP".

The configurations of the radio frame, the subframe, the slot, the mini slot, the symbol and the like described above are merely examples. For example, configurations such as a number of subframes included in the radio frame, a number of slots per subframe or radio frame, a number of mini slots included in the slot, a number of symbols and RBs included in the slot or the mini slot, a number of subcarriers included in RB, a number of symbols in TTI, the symbol length, the cyclic prefix (CP) length can be changed in various ways.

In the present disclosure, if an article is added by translation, for example, a, an and the in English, the present disclosure may include plural nouns following these articles.

In the present disclosure, a term "A and B are different" may mean "A and B are different from each other". The term may also mean "A and B are different from C". Terms such as "separate", "combine" and the like may be interpreted in the same way as "be different".

Each aspect/embodiment described in the present disclosure may be used alone, may be used in combination, or may be used by switching according to performance. Further, a notification of predetermined information (for example, a notification of "being X") is not limited to an explicit one, and may be performed implicitly (for example, the notification of the predetermined information is not performed).

Although the present disclosure has been described in detail above, it is clear to those skilled in the art that the present disclosure is not limited to the embodiments described in the present disclosure. The present disclosure may be implemented as amendment and modification aspects without departing from the spirit and scope of the present disclosure, which are determined by the description of the scope of claims. Therefore, description of the present disclosure is for purposes of illustration and does not have any limiting meaning to the present disclosure.

### [Explanation of Reference Numerals]

10 Base station
110 Transmitting unit
120 Receiving unit
130 Configuring unit
140 Controlling unit
20 Terminal
210 Transmitting unit
220 Receiving unit
230 Configuring unit
240 Controlling unit
1001 Processor
1002 Storage device
1003 Auxiliary storage device
1004 Communication device
1005 Input device
1006 Output device

## Claims

1. A terminal comprising a receiving unit configured to receive, from a base station, resource configuration information of an SRS (sounding reference signal) for antenna switching, and
a transmitting unit configured to transmit a plurality of SRS with a guard period of a number of symbols greater than a specific number of symbols based on the resource configuration information.

2. The terminal according to claim 1, wherein when a subcarrier spacing used by the terminal is 240 kHz or greater, the specific number of symbols is 2.

3. The terminal according to claim 1 or 2, wherein one or more SRS resource sets are configured according to the resource configuration information, and the SRS resource sets each contain a number of SRS resources equal to or less than a specific number;
the transmitting unit transmits SRS through the number of SRS resources equal to or less than a specific number in each of a plurality of slots in which the plurality of SRS resource sets are configured.

4. The terminal according to claim 3, wherein the number of SRS resources equal to or less than a specific value is one.

5. A base station comprising a transmitting unit configured to transmit resource configuration information of an SRS (sounding reference signal) for antenna switching to a terminal, and
a receiving unit configured to receive, from the terminal, a plurality of SRS transmitted with a guard period of a number of symbols greater than a specific number of symbols based on the resource configuration information.

6. The base station according to claim 5, comprising a controlling unit configured to determine the number of SRS resource sets in the SRS resource configuration information or the number of SRS resource per SRS resource set based on capability information indicating x transmissions and y receptions received from the terminal.
